# EUROPEAN PATENT APPLICATION

(11) **EP 4 265 669 A1**
(43) Date of publication of application: **25.10.2023**
(21) Application number: 21906364.1
(22) Date of filing: 02.12.2021
(51) Int. Cl.: C08J 5/00, B60N 3/00, B32B 33/00

(54) **POLYMERIC ARTICLE, COMPOSITE ARTICLE, AND PRODUCTION METHODS THEREFOR**

(30) Priority: 16.12.2020 JP 2020208806
(71) Applicant: Toyoda Iron Works Co., Ltd., Toyota-shi, Aichi 471-8507 (JP)
(72) Inventor: ONUMA, Kenji, Toyota-shi, Aichi 471-8507 (JP); YOSHIDA, Kenichi, Toyota-shi, Aichi 471-8507 (JP)
(74) Representative: Zimmermann, Tankred Klaus
(86) International application number: PCT/JP2021/044242
(87) International publication number: WO 2022/131001

(57) **Abstract**

Provided are a polymeric article and a composite article capable of obtaining favorable texture with a high resilience by using thermoplastic elastomer. A composite article includes: a first member; and a second member having a plate-shaped portion and a plurality of protrusions protruding from the back surface of the plate-shaped portion and having protruding ends contacting the first member, and cushioning properties are imparted to the composite article by elastic deformation of the second member. The plate-shaped portion and the plurality of protrusions are integrally made of solid thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255, and a hysteresis loss rate measured at 23°C by compressing and depressurizing the composite article at a speed of 60 mm/min is 28% or less.

## Description

### TECHNICAL FIELD

The present invention relates to a polymeric article and composite article having cushioning properties and a method for manufacturing the polymeric article and the composite article.

### BACKGROUND ART

It has been widely practiced to impart a feeling of softness to a product, with which, e.g., an elbow, a shoulder, an arm, or a leg of a person often contacts, by forming an outer surface portion of the product as a structure having cushioning properties. For example, an arm rest of a door trim, which is a vehicle interior component with which an elbow of an occupant contacts, is often configured as a composite article configured such that a first member maintaining a product shape and a second member imparting a feeling of softness are combined.

Patent Literature 1 describes, as examples of such a composite article, the following arm rests (1) to (4) different from each other in a form of the second member imparting a feeling of softness.

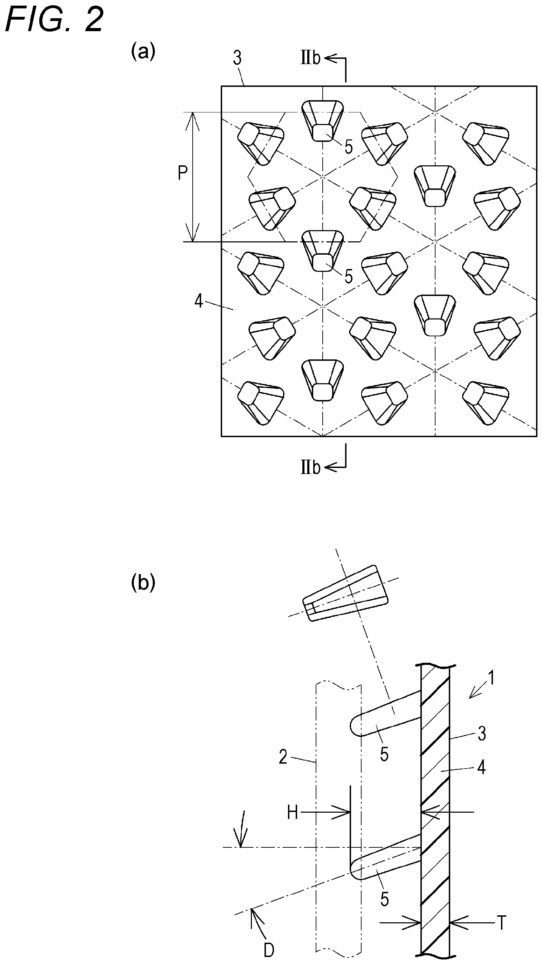

(1) An arm rest of such a type that a second member configured such that a polyurethane foam is wrapped with a thin skin made of olefin-based thermoplastic elastomer (TPO) is attached to an outer surface of a first member (molded base) made of polypropylene (PP) (Fig. 14 of the literature above). It is described that the polyurethane foam has a high elasticity, and therefore, a feeling of softness is appropriately imparted to the outer surface portion.
(2) An arm rest of such a type that a relatively-thick second member made of TPO is attached to an outer surface of a first member made of PP (Fig. 12 of the literature above). TPO is a resin material having a high blending ratio of a rubber component (EPDM) or an oil component (e.g., liquid paraffin) with respect to, e.g., PP, and it is described that this imparts a feeling of softness to the outer surface portion formed by the second member.
(3) An arm rest of such a type that a second member including an inner foam layer and an outer skin layer made of TPO is attached to an outer surface of a first member made of PP (Fig. 2 of the literature above). It is described that a uniform feeling of softness is obtained by the elasticity of the inner foam layer and oil resistance and scratch resistance are improved by the outer skin layer.
(4) An arm rest of such a type that a skin integrally provided with a second member including a skin made of TPO and many pin-shaped or rib-shaped protrusions protruding from the back surface of the skin is stopped on and attached to an outer surface of a first member made of PP (Fig. 13 of the literature above). It is described that elasticity is imparted by flexural deformation of the protrusions, whereby a feeling of softness is imparted to the member outer surface portion formed by the skin.

In the type (1) above, since the polyurethane foam is used for the second member, there are problems such as a high material cost and easy deterioration due to heat or hydrolysis. For this reason, the types (2) to (4) above in which thermoplastic elastomer with fewer of the aforementioned problems is used for the second member are preferable, and particularly, use of the type (4) has increased.

Patent Literature 2 describes that in the type (4) above, the second member is made of, e.g., TPO, polyvinyl chloride (PVC), or polyurethane-based thermoplastic elastomer (TPU).

Patent Literature 3 describes that in the type (4) above, the second member is made of soft PVC, TPO, styrene-based thermoplastic elastomer (TPS), or polyester-based thermoplastic elastomer (TPEE).

### CITATION LIST

### PATENT LITERATURE

PATENT LITERATURE 1: JP-A-2003-103676
PATENT LITERATURE 2: Japanese Patent No. 5299055
PATENT LITERATURE 3: Japanese Patent No. 5651806
PATENT LITERATURE 4: Japanese Patent No. 6380638

### SUMMARY OF INVENTION

### PROBLEMS TO BE SOLVED BY INVENTION

The types (2) to (4) above using the thermoplastic elastomer for the second member have been developed mainly to stably obtain a feeling of softness without variation, and it can be said that the problems have been considerably solved.

However, when the present inventors have comprehensively studied texture in these types, such texture is not equal to texture in the type (1) above using the polyurethane foam. This is because the polyurethane foam has a relatively-high resilience and texture with such a high resilience is comfortable for a user, whereas one using thermoplastic elastomer has a relatively-low resilience and thus has texture without tension.

Meanwhile, in recent years, a molded foam made of a thermoplastic polyester elastomer resin composition and having a density of 0.01 to 0.40 g/cm³, a hysteresis loss rate of 20% or less, and a hardness of 10 to 60 C has been developed (Patent Literature 4). However, it is considered that a sufficient impact resilience modulus cannot be obtained even when the second member as described above in (3) is made of such a molded foam.

Thus, an object of the present invention is to provide a composite article capable of obtaining favorable texture with a high resilience by using thermoplastic elastomer.

### SOLUTION TO PROBLEMS

### [1] Polymeric article

A polymeric article to which cushioning properties are imparted by elastic deformation of the polymeric article,
the polymeric article being made of solid (non-foamed) thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255,
a hysteresis loss rate measured at 23°C by compressing and depressurizing the polymeric article at a speed of 60 mm/min being 28% or less.

### [2] Composite article

A composite article including a first member and a second member including a plate-shaped portion and a plurality of protrusions protruding from a back surface of the plate-shaped portion and having protruding ends contacting the first member,
cushioning properties being imparted to the composite article by elastic deformation of the second member,
the plate-shaped portion and the plurality of protrusions being integrally made of solid thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255, and
a hysteresis loss rate measured at 23°C by compressing and depressurizing the composite article at a speed of 60 mm/min being 28% or less.

Here, a load is preferably 2 to 12 N when a displacement is 1 mm during the compression by an indenter having a spherical radius of 10 mm at a tip end. This is because an appropriate feeling of softness can be obtained.

### [3] Method for manufacturing polymeric article

A method for manufacturing a polymeric article to which cushioning properties are imparted by elastic deformation of the polymeric article, the method including
injecting, into a mold, solid thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255 to mold the polymeric article whose hysteresis loss rate measured at 23°C by compressing and depressurizing the polymeric article at a speed of 60 mm/min is 28% or less.

### [4] Method for manufacturing composite article

A method for manufacturing a composite article including a first member and a second member having a plate-shaped portion and a plurality of protrusions protruding from a back surface of the plate-shaped portion and having protruding ends contacting the first member, cushioning properties being imparted to the composite article by elastic deformation of the second member, the method including
injecting, into a mold, solid thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255 to integrally mold the plate-shaped portion and the plurality of protrusions, and
a hysteresis loss rate measured at 23°C by compressing and depressurizing the composite article at a speed of 60 mm/min being 28% or less.

### [Features]

The polymeric article or the plate-shaped portion and the plurality of protrusions of the second member of the composite article are made of the solid thermoplastic elastomer or slightly-foamed thermoplastic elastomer with an expansion ratio of 1.1 or less, the thermoplastic elastomer having an impact resilience modulus of 30 to 90%, and the hysteresis loss rate of the polymeric article or the composite article is 28% or less, so that favorable texture can be obtained with a high resilience.

When the hysteresis loss rate exceeds 28%, the protrusions remain crushed due to creep deformation caused by heat, and the texture is deteriorated without tension. This leads to cheapness.

The lower limit of the hysteresis loss rate is not particularly limited, and is determined by the limit value of the material. Suffice it to say, the lower limit is 1%.

### EFFECTS OF INVENTION

According to the present invention, favorable texture can be obtained with a high resilience by using the thermoplastic elastomer.

### BRIEF DESCRIPTION OF DRAWINGS

Fig. 1 shows an example of the present invention, Fig. 1(a) being a schematic view of a door trim as viewed from the inside of a vehicle, Fig. 1(b) being a cross-sectional view of an arm rest of the example along a line Ib-Ib, and Fig. 1(c) being a cross-sectional view of an ornament of the example along a line Ic-Ic;
Fig. 2 shows part of the arm rest of the example, Fig. 2(a) being a back view and Fig. 2(b) being a cross-sectional view along a line IIb-IIb;
Fig. 3 shows, e.g., a method for measuring a load-displacement curve and a hysteresis loss rate, Fig. 3(a) being a schematic view in measurement in Examples 1-1 to 1-4 and Comparative Examples 3 and 4, Fig. 3(b) being a schematic view in measurement (left side) and a schematic view of an arm rest (right side) in Example 2, and Fig. 3(c) being a schematic view in measurement (left side) and a schematic view of an arm rest (right side) in Comparative Examples 1 and 2;
Fig. 4 shows graphs of the load-displacement curves of Examples 1-1 to 1-4;
   and
Fig. 5 shows graphs of the load-displacement curves of Comparative Examples 1 and 2.

### DESCRIPTION OF EMBODIMENTS

### 1. Polymeric article or composite article

A product to which a polymeric article or a composite article of the present invention is applied is not particularly limited, but a product with which a person (particularly, elbows, shoulders, arms, legs, and the like) intentionally or unintentionally contacts is suitable and examples thereof are as follows:
(A) Vehicle interior component
   - a door trim, a rear side trim, a luggage side trim, a center console, or an arm rest or ornament provided thereon,
   - an arm rest or leg rest of a seat, and
   - an instrument panel, a pillar garnish, a roof panel, or the like;
(B) Arm rest and leg rest of chair other than those for vehicle;
(C) Front portion, upper surface portion, or corner portion of furniture or fitting; and
(D) Office supplies
   a mouse pad, a list rest, or the like.

### 2. First member

A first member is not particularly limited, and examples thereof include a member immediately below a surface layer portion, base, and the like of the composite article.

The material of the first member is not particularly limited, but is preferably higher in hardness than the material of a second member in order to maintain the shape of the product, and examples thereof include various resins, metals, woods, and ceramics.

The shape of the first member is not particularly limited, and examples thereof include a plate shape, an annular shape, and a lump shape.

### 3. Second member

The second member is not particularly limited, and examples thereof include a surface layer member forming a surface layer portion of the composite article.

### 3-1. Plate-shaped portion and protrusion

The thickness of a plate-shaped portion is not particularly limited, but is preferably 1 to 2.5 mm.

The cross-sectional area of a base end of a protrusion is not particularly limited, but is preferably 1.5 to 15 mm².

The height of the protrusion perpendicular to the plane thereof is not particularly limited, but is preferably 1.5 to 5 mm.

The pitch P (distance between the centers of the base ends) of the protrusions is not particularly limited, but is preferably 1.5 to 16 mm and more preferably 2 to 11 mm.

The inclination angle (inclination angle with respect to a direction perpendicular to the plate-shaped portion) of the protrusion is not particularly limited, but is preferably 2 to 40°.

### 3-2. Thermoplastic elastomer (TPE)

The type of thermoplastic elastomer is not particularly limited as long as the thermoplastic elastomer is solid thermoplastic elastomer or slightly-foamed thermoplastic elastomer with an expansion ratio of 1.1 or less, the thermoplastic elastomer having an impact resilience modulus of 30 to 90% and satisfies a condition where the hysteresis loss rate of the polymeric article or the composite article is 28% or less, but TPEE, TPU, and the like that are likely to satisfy the condition are preferable. The reason why the thermoplastic elastomer is the solid thermoplastic elastomer or slightly-foamed thermoplastic elastomer with an expansion ratio of 1.1 or less is that it is easy to obtain a sufficient impact resilience modulus as compared with that of highly-foamed thermoplastic elastomer having an expansion ratio of more than 1.1.

The thermoplastic elastomer more preferably has an impact resilience modulus of 56 to 80%. This is because favorable texture can be obtained with a higher resilience.

The hysteresis loss rate of the polymeric article or the composite article is preferably 3 to 20%. This is because favorable texture can be obtained with a higher resilience.

### EXAMPLES

Next, examples of the present invention will be described with reference to the drawings. Note that the structure, material, shape, and dimensions of each component of the examples are examples and can be appropriately changed without departing from the gist of the invention.

### [Example 1]

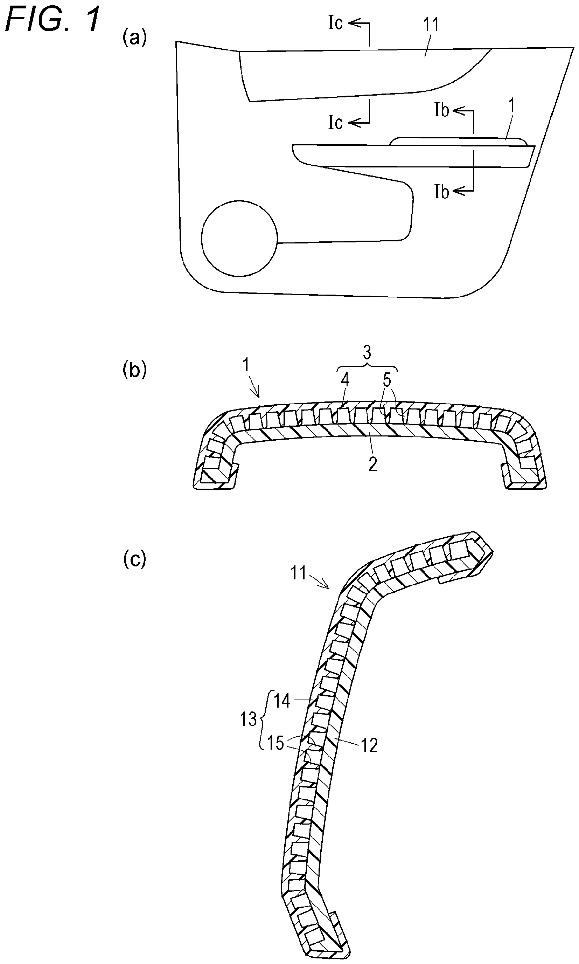

Fig. 1(a) is a schematic view of a door trim, which is a vehicle interior component, as viewed from the inside of a vehicle, and shows an arm rest 1 of Example 1 attached to the door trim and an ornament 10 of the example attached to the door trim.

As shown in a cross section in Fig. 1(b), the arm rest 1 of Example 1 is a composite article including: a base 2 which is the first member; and a surface layer member 3, which is the second member, including a plate-shaped portion 4 and a plurality of protrusions 5 protruding from the back surface of the plate-shaped portion 4 and having protruding ends contacting the base 2. By the protrusions 5, a space is defined between the plate-shaped portion 4 and the base 2, and an outer peripheral end portion of the plate-shaped portion 4 is wound around and fixed to an outer peripheral edge portion of the base 2 in a state of tip ends of the protrusions 5 contacting (not joined to) the base 2. Cushioning properties are imparted by elastic deformation of the surface layer member 3, and a hysteresis loss rate measured at 23°C by compressing and depressurizing the composite article at a speed of 60 mm/min is 28% or less.

As shown in a cross section in Fig. 1(c), an ornament 11 of the example is a composite article including: a base 12 which is the first member; and a surface layer member 13, which is the second member, including a plate-shaped portion 14 and a plurality of protrusions 15 protruding from the back surface of the plate-shaped portion 14 and having protruding ends contacting the base 12. By the protrusions 15, a space is defined between the plate-shaped portion 14 and the base 12, and an outer peripheral end portion of the plate-shaped portion 14 is wound around and fixed to an outer peripheral edge portion of the base 12 in a state of tip ends of the protrusions 15 contacting the base 12. Cushioning properties are imparted by elastic deformation of the surface layer member 13, and a hysteresis loss rate measured at 23°C by compressing and depressurizing the composite article at a speed of 60 mm/min is 28% or less.

Hereinafter, each component of the arm rest 1 of Example 1 will be described, but each component of the ornament 11 of the example is also configured basically similarly to each component of the arm rest 1.

The base 2 is formed in a plate shape from PP. The thickness of the base 2 is 1 to 3 mm. The hardness (Rockwell hardness) of PP is R70 to 100.

The surface layer member 3 (plate-shaped portion 4 and plurality of protrusions 5) is integrally made of solid thermoplastic elastomer or slightly-foamed thermoplastic elastomer having an impact resilience modulus of 56 to 80% at 23°C measured in accordance with JIS K6255 and an expansion ratio of 1.1 or less. A method for forming the surface layer member 3 is injection molding in which the heated thermoplastic elastomer is injected into a mold.

Arrangement of the plurality of protrusions 5 can be appropriately determined so that a feeling of softness can be stably obtained without variation. In the present example, as shown in Fig. 2, the plurality of protrusions 5 is provided, as viewed perpendicularly to the plate-shaped portion 4, at such positions that the protrusions 5 each form the sides of many polygons (in the shown example, regular hexagons as indicated by a chain double-dashed line) so as to form a lattice pattern in which each side of one polygon overlaps with a corresponding one of the sides of an adjacent polygon. The protrusion 5 has a long shape (rectangular shape with four rounded corners) as viewed perpendicularly as described above, and is arranged in such a posture that the longitudinal direction thereof coincides with the side of the polygon. In addition, the protrusion 5 has a gentle tapered shape in which the cross-sectional area thereof decreases toward the tip end side.

The thickness T of the plate-shaped portion 4, the cross-sectional area of the base end of the protrusion 5, the height H of the protrusion 5 perpendicular to the plane thereof, the inclination angle D of the protrusion 5, the pitch P of the protrusions 5, and the like can be arbitrarily determined within such a range that the hysteresis loss rate is 28% or less.

More specifically, for the arm rest 1 of the example, Examples 1-1 to 1-4 shown in Table 1 below were implemented. These examples are different from each other only in the surface layer member 3, and are the same as each other in the base 2.

**[Table 1]**

| | | | **Example 1.1** | **Example 1.2** | **Example 1.3** | **Example 14** | **Example 2** |
|---|---|---|---|---|---|---|---|
| **Material** | | | **TPEE** | | | | |
| **Molding Method** | **Method** | | **Injection Molding** | | | | |
| | **Resin Temperature [°C]** | | **220** | | | | |
| | **Mold Temperature [°C]** | | **40** | | | | |
| **Material Physical Properties** | **Impact Resilience Modulus (JIS K6255) [%]** | | **56-80** | | | | |
| | **Hardness (Shore A)** | | **70-90** | | | | |
| **Molded Article** | **Plate-Shaped Portion + Protrusion Shape** | **Plate-Shaped Portion Thickness T [mm]** | **2** | | | | **4** |
| | | **Protrusion Height H [mm]** | **1.5** | **4.5** | **3.5** | **3.5** | **No Protrusions** |
| | | **Protrusion Angle D [°]** | **15-30** | | | | |
| | | **Protrusion Pitch P [mm]** | **5.5** | **8** | **5.5** | **11** | |
| | **Hysteresis Loss Rate [%]** | **Actual Measurement (N = 3)** | **3** | **1Pr19** | **4-9** | **21-28** | **1** |

In Examples 1-1 to 1-4, the plate-shaped portion 4 and the plurality of protrusions 5 are integrally made of solid TPEE having an impact resilience modulus of 56 to 80% at 23°C measured in accordance with JIS K6255 and a hardness (Shore A) of 70 to 90. In each example, the thickness T of the plate-shaped portion 4 is 2 mm. The examples are different from each other as in Table 1 in the height H of the protrusion 5 perpendicular to the plane thereof and the pitch P (note that it is the pitch of the protrusions 5 provided on two parallel sides of the regular hexagon of the lattice pattern) of the protrusions 5.

### [Example 2]

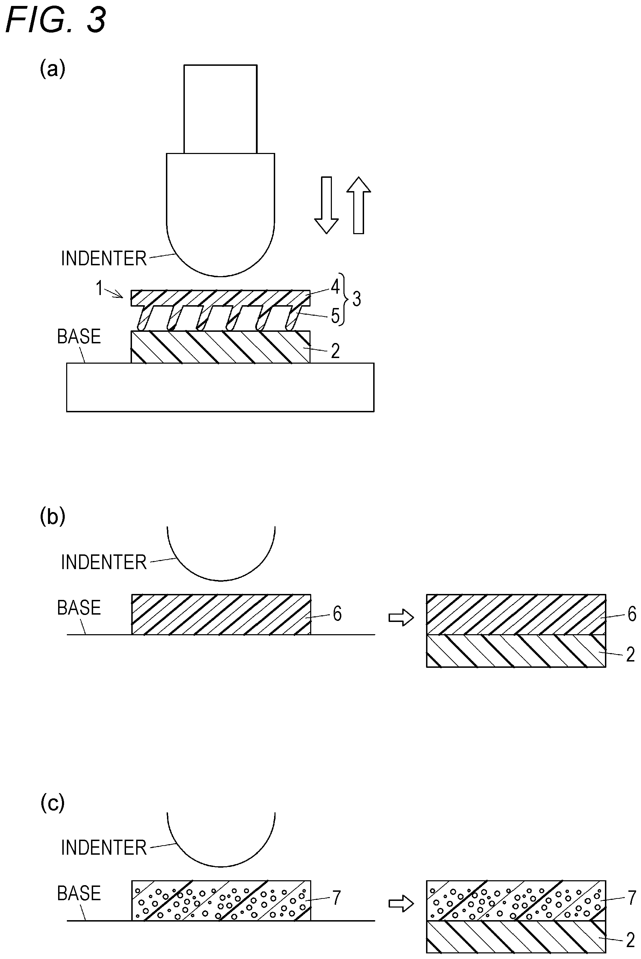

Next, an arm rest of Example 2 is partially shown on the right side in Fig. 3(b), and is different from Example 1-1 in that a surface layer member 6 includes only a plate-shaped portion having a thickness of 4 mm and made of the same TPEE as that in Example 1-1 and has no protrusions, as also described in Table 1.

In the arm rest of Example 2, the surface layer member 6 which is a polymeric article is stacked on a base 2. The surface layer member 6 is not joined to the base 2, but may be joined to the base 2.

A method for forming the surface layer member 6 is injection molding.

### [Comparative Examples]

Further, Comparative Examples 1 to 4 shown in Table 2 below were implemented. These examples are different from each other only in the surface layer member 3, and are the same as each other in the base 2.

**[Table 2]**

| | | | **Comparative Example 1** | **Comparative Example 2** | **Comparative Example 3** | **Comparative Example 4** |
|---|---|---|---|---|---|---|
| **Material** | | | **Polyurethane** | | **TPO** | **PVC** |
| **Molding Method** | **Method** | | **Mold-Urethane Foam Molding** | **Slab-Urethane Foam Molding** | **Injection Molding** | **Injection Molding** |
| | **Resin Temperature [°C]** | | **-** | **-** | **200** | **200** |
| | **Mold Temperature [°C]** | | **-** | **-** | **40** | **40** |
| **Material Physical Properties** | **Impact Resilience Modulus (JIS K6255) [%]** | | **-** | **-** | **25-35** | **20-30** |
| | **Hardness (Shore A)** | | **-** | **-** | **70-90** | **65-85** |
| **Molded Article** | **Pad Shape** | **Foam Thickness [mm]** | **10** | **3** | **-** | **-** |
| | | **Base Weight [g/cm3]** | **0.14** | **0.03** | **-** | **-** |
| | **Plate-Shaped Portion + Protrusion Shape** | **Plate-Shaped Portion Thickness T [mm]** | | **-** | **2** | **2** |
| | | **Protrusion Height H [mm]** | **-** | **-** | **4.5** | **4.5** |
| | | **Protrusion Angle D [°]** | | | **15-30** | |
| | | **Protrusion Pitch P [mm]** | **-** | **-** | **8** | **8** |
| | **Hysteresis Loss Rate [%]** | **Actual Measurement (N = 3)** | **9-13** | **18-20** | **32-34** | **33-42** |

As partially shown on the right side in Fig. 3(c), the arm rests of Comparative Examples 1 and 2 are different from those of the examples in that a surface layer member 7 is formed only of a foam (integral skin foam including a skin layer on a surface and a highly-foamed layer inside) made of polyurethane and has no protrusions.

In the arm rests of Comparative Examples 1 and 2, the surface layer member 7 is stacked on the base 2, and is not joined to the base 2.

A method for forming the foam is mold-urethane foam molding in Comparative Example 1 and slab-urethane foam molding in Comparative Example 2.

Each of the arm rests of Comparative Examples 3 and 4 is configured such that a plate-shaped portion and a plurality of protrusions are integrally made of solid thermoplastic elastomer as in Examples 1-1 to 1-4, but is different from the examples in the material and properties of the thermoplastic elastomer.

### [Measurement of load-displacement curve and hysteresis loss rate]

For each arm rest of the above-described examples and comparative examples, a load-displacement curve and the hysteresis loss rate were measured as follows.

For Examples 1-1 to 1-4, as shown in Fig. 3(a), part (60 mm × 60 mm) of the arm rest, which is the composite article, was cut out, and was placed on a base of an autograph with the base 2 on the lower side and the surface layer member 3 on the upper side. Then, the part was downwardly compressed (pushed down by 1.5 mm) and depressurized (lifted) at a speed of 60 mm/min by an indenter having a spherical radius of 10 mm at a tip end. Subsequently, the load-displacement curve was recorded three times, and the hysteresis loss rate (= 1 - (load upon release)/(load upon push) was obtained.

For Example 2, as shown on the left side in Fig. 3(b), measurement was performed as in, e.g., Example 1-1 only for the surface layer member 6 which is the polymeric article.

For Comparative Examples 1 and 2, as shown on the left side in Fig. 3(c), measurement was performed as in, e.g., Example 1-1 only for the surface layer member 7.

For Comparative Examples 3 and 4, as shown in Fig. 3(a), measurement was performed as in, e.g., Example 1-1 only for the surface layer member and the base.

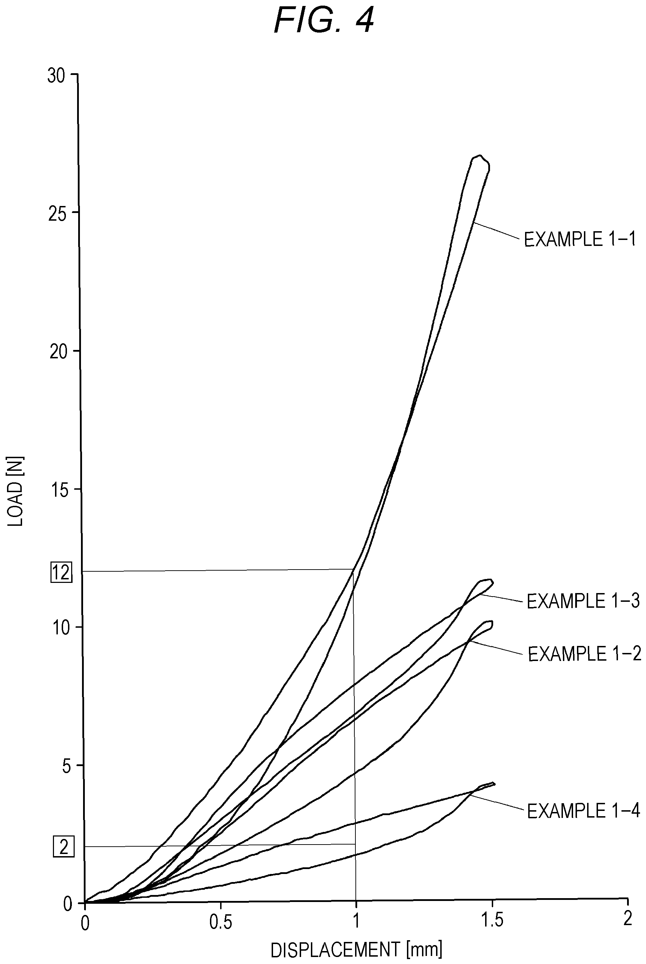

Fig. 4 shows the load-displacement curves of Examples 1-1 to 1-4. On the small displacement side of each curve, the upper curve indicates a compression process, and the lower curve indicates a depressurization process. In each example, the opening of the curve between compression and depressurization was relatively small, and the hysteresis loss rate was 28% or less as shown in Table 1. Thus, favorable texture was obtained with a high resilience. Particularly, in Examples 1-1 to 1-3, the hysteresis loss rate was 20% or less, and therefore, better texture was obtained. In addition, in each example, in the course of compression, the load was 2 to 12 N when the displacement is 1 mm, and therefore, a moderate feeling of softness was obtained.

In Example 2, the hysteresis loss rate was 1%, and texture was obtained with a particularly high resilience.

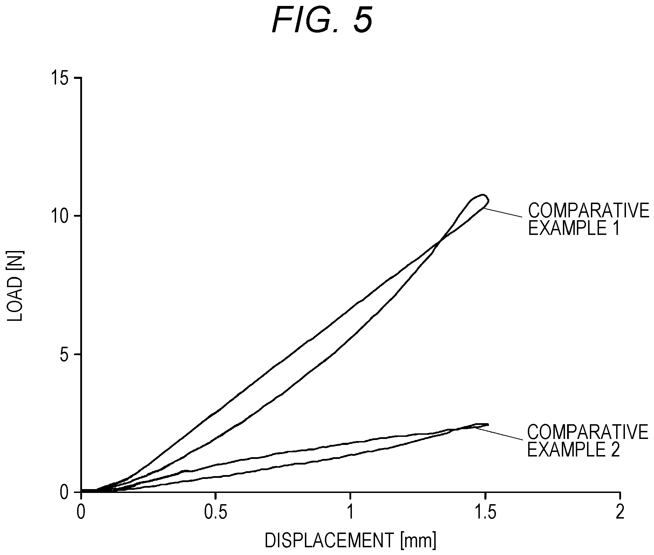

On the other hand, in Comparative Examples 1 and 2, the opening of the curve between compression and depressurization was relatively small as shown in the load-displacement curves in Fig. 5, and the hysteresis loss rate was 20% or less as shown in Table 2. However, as described above, there are problems such as a high polyurethane material cost and easy deterioration due to heat or hydrolysis.

In Comparative Examples 3 and 4, the hysteresis loss rate was 30% or more as shown in Table 2, and therefore, texture was obtained with a low resilience as in a typical thermoplastic elastomer product.

Noted that the present invention is not limited to the above examples and can be embodied by being appropriately changed without departing from the gist of the invention as follows, for example.

Modifications similar to the examples were implemented except that injection foam molding was performed after a slight amount of foaming agent had been added to TPEE of the examples and slightly-foamed thermoplastic elastomer having an impact resilience modulus of 56 to 80% and an expansion ratio of 1.1 was used, and as a result, the hysteresis loss rate was 28% or less in any of these cases.

### LIST OF REFERENCE SIGNS

- 1: Arm rest
- 2: Base
- 3: Surface layer member
- 4: Plate-shaped portion
- 5: Protrusion
- 6: Surface layer member
- 11: Ornament
- 12: Base
- 13: Surface layer member
- 14: Plate-shaped portion
- 15: Protrusion

## Claims

1. A polymeric article to which a cushioning property is imparted by elastic deformation of the polymeric article, comprising:
solid thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255,
wherein a hysteresis loss rate measured at 23°C by compressing and depressurizing the polymeric article at a speed of 60 mm/min is 28% or less.

2. A composite article comprising:
a first member; and
a second member including a plate-shaped portion and a plurality of protrusions protruding from a back surface of the plate-shaped portion and having protruding ends contacting the first member,
wherein a cushioning property is imparted to the composite article by elastic deformation of the second member,
the plate-shaped portion and the plurality of protrusions are integrally made of solid thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255, and
a hysteresis loss rate measured at 23°C by compressing and depressurizing the composite article at a speed of 60 mm/min is 28% or less.

3. The composite article according to claim 1, wherein
a load is 2 to 12 N when a displacement is 1 mm during the compression by an indenter having a spherical radius of 10 mm at a tip end.

4. The composite article according to claim 2 or 3, wherein
the composite article is a vehicle interior component.

5. The composite article according to claim 2, 3, or 4, wherein
the composite article is an arm rest.

6. A method for manufacturing a polymeric article to which a cushioning property is imparted by elastic deformation of the polymeric article, comprising:
injecting, into a mold, solid thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255 to mold the polymeric article whose hysteresis loss rate measured at 23°C by compressing and depressurizing the polymeric article at a speed of 60 mm/min is 28% or less.

7. A method for manufacturing a composite article including: a first member; and a second member having a plate-shaped portion and a plurality of protrusions protruding from a back surface of the plate-shaped portion and having protruding ends contacting the first member, a cushioning property being imparted to the composite article by elastic deformation of the second member, the method comprising:
injecting, into a mold, solid thermoplastic elastomer or slightly-foamed thermoplastic elastomer with an expansion ratio of 1.1 or less, the thermoplastic elastomer having an impact resilience modulus of 30 to 90% at 23°C measured in accordance with JIS K6255 to integrally mold the plate-shaped portion and the plurality of protrusions,
wherein a hysteresis loss rate measured at 23°C by compressing and depressurizing the composite article at a speed of 60 mm/min is 28% or less.
